# EUROPEAN PATENT SPECIFICATION

(11) **EP 3 604 174 B1**
(45) Date of publication and mention of the grant of the patent: **11.03.2026**
(21) Application number: 18858474.2
(22) Date of filing: 27.06.2018
(51) Int. Cl.: B65D 85/68, B65G 67/20, B60P 3/075

(54) **VEHICLE TRANSPORTING FRAME**
FAHRZEUGTRANSPORTRAHMEN
CHÂSSIS DE TRANSPORT DE VÉHICULE

(30) Priority: 21.09.2017 CN 201710859775
(43) Date of publication of application: 05.02.2020
(73) Proprietor: Dalian CIMC Special Logistics Equipments Co., Ltd., Dalian, Liaoning 116600 (CN)
(72) Inventor: JI, Yubo, Dalian Liaoning 116600 (CN); ZHANG, Xiaojun, Dalian Liaoning 116600 (CN); DAI, Haiyan, Dalian Liaoning 116600 (CN); LIU, Donghai, Dalian Liaoning 116600 (CN); WAN, Lixin, Dalian Liaoning 116600 (CN); LIU, Wenhao, Dalian Liaoning 116600 (CN); SONG, Zhaochun, Dalian Liaoning 116600 (CN)
(74) Representative: Kordel, Mattias
(86) International application number: PCT/CN2018/093037
(87) International publication number: WO 2019/056824

(56) References cited:
- EP-A1- 3 048 067
- EP-B1- 1 930 260
- CN-U- 205 931 947
- CN-U- 206 384 597
- CN-U- 206 384 597
- CN-U- 207 258 213
- CN-Y- 201 009 793
- JP-A- 2011 016 536
- US-A- 3 675 795
- US-A- 5 890 855

## Description

### BACKGROUND

The present invention relates to the technical field of a container, and particularly to a vehicle transporting frame.

At present, there is a growing demand for vehicle logistics transportation, and automobile container transport which fits multimodal transport, such as marine transport, land transport and rail transport, also becomes increasingly widespread. In the more recent years, the domestic automobile development shows a tendency of large size, big wheel base, and popular SUVs. The following problems exist in container transportation due to large size of medium-to-large vehicles and SUVs: if the vehicle described above lies flat within the container, a driver may not open the door and walk out of the vehicle, because of the wide bodywork, after driving the vehicle directly into the container. Meanwhile, the operator probably cannot enter inside the container to secure the vehicles. The vehicle transporting frame, which is originally applied to small and medium-sized vehicles, may be unsuitable to carry medium-to-large vehicles and SUVs due to large size thereof.

EP 3048067A1 provides a freight rack comprising two sets of portal supports standing with an interval in a front and rear direction on a base member. The two sets of portal supports comprise right and left pillars and a horizontal member coupled to each other. The horizontal member is vertically shiftable along the pillars and fixed to the pillars at a selected height. A freight mounting frame is supported by the horizontal member of one portal support so as to be rotatable in a vertical plane, and is also placed on the horizontal member of the other portal support so as to be movable in the front and rear direction.

CN 206384597U provides a vehicle frame including underframe, support frame, and supporting part. Support frame is pivotably connected to underframe so as to carry vehicles; One end of supporting part is pivotably coupled to one of underframe and support frame, and the other of underframe and support frame are provided with least one neck, and the other end of supporting part is engageable with the at least one neck to support the support frame obliquely relative to underframe.

CN 205931947U provides an automobile transportation frame for container, comprising two pairs of stands, transverse bracing piece, front wheel holder, and rear wheel holders. Two pairs of stands are used for setting up in the container against lateral wall and bottom plate, and the stand has connecting portion; transverse bracing piece is adjustably connected between the top of a pair of stands to make the stands supported by the lateral wall; the front wheel holder is connected between a pair of stands and movable up and down relative to the stands via connecting portion; the rear wheel holder is connected between another pair of stands and movable up and down relative to the stands via connecting portion, the two pairs of stands each, transverse bracing piece, front wheel holder, and rear wheel holder are detachably mounted to each other.

However, there still is a need to provide a vehicle transporting frame to at least partially solve the abovementioned problem.

### SUMMARY

A series of simplified concepts is introduced into the portion of Summary, which would be further described in the portion of the detailed description. The Summary of the present invention does not mean attempting to define the key feature(s) and necessary technical feature(s) of the claimed technical solution, let alone determining the protection scope thereof.

To at least partially solve the problem, the present invention discloses a vehicle transporting frame, characterized in, comprising:
a lower frame;
standing posts having one end hinged to the lower frame and being sleeved with sleeve tubes slidable relative thereto, and the sleeve tubes having sleeve tube connection shafts;
an upper frame having one end hinged to the lower frame and the other end connected with the sleeve tube connection shafts.

According to the present invention, an angle of the upper frame of the vehicle transporting frame relative to the lower frame is adjustable, thus enabling optimal utilization of an internal space of a container. Furthermore, medium-to-large vehicles and SUVs can be loaded on and secured at an outer side of the container, thus eliminating operation inconvenience or safety risks caused by insufficient space within the container.

Alternatively, the lower frame comprises two lower frame side beams arranged in parallel and a lower frame transverse beam connected to the two lower frame side beams.

Alternatively, the lower frame transverse beam is provided with a fork lift pockets.

According to the invention, a vehicle channel plate is arranged in parallel between the lower frame transverse beams.

Alternatively, at least one end of the lower frame side beam is provided with a support beam telescopically secured relative thereto.

Alternatively, the lower frame side beam is provided with a hinge mount for hinging with the upper frame and the standing post, respectively.

Alternatively, one end of the lower frame side beam near the upper frame is provided with a moving wheel.

Alternatively, the upper frame comprises two upper frame side beams arranged in parallel and an upper frame transverse beam interconnecting the two upper frame side beams.

Alternatively, the upper frame further comprises a first tire holder near an end of the upper frame side beam.

Alternatively, the upper frame transverse beams comprise a position-adjustable tire holding beam and/or a movable transverse beam detachably connected to the upper frame side beams.

Alternatively, the upper frame side beam is provided with an upper frame connection shaft for hinging with a lower frame and an upper frame hinge mount for connecting with the sleeve tube connection shafts.

Alternatively, one end of the upper frame side beam away from the lower frame is provided with a connector for cooperating with a forklift.

According to the invention, the standing posts have a plurality of standing post holes, and the sleeve tubes have a positioning hole and are connected with the standing posts by a hinge pin passing through the positioning hole and one of the plurality of standing post holes.

Alternatively, the standing posts have a stop pin to define a highest position and/or a lowest position of the sleeve tubes relative to the standing posts.

Alternatively, a top end of the standing posts is provided with a crashworthy standing post telescopically secured relative to the standing posts.

### BRIEF DESCRIPTION OF THE DRAWINGS

The following drawings herein function as part of the present invention for understanding the present invention. The embodiments are illustrated and described in the drawings in order to explain the principles of the present invention. In the drawings:
Fig. 1 is a perspective view of a vehicle transporting frame;
Fig. 2 is a perspective view of a lower frame of the vehicle transporting frame shown in Fig. 1;
Fig. 3 is a perspective view of an upper frame of the vehicle transporting frame shown in Fig. 1;
Fig. 4A is a perspective view of a standing post of the vehicle transporting frame shown in Fig. 1;
Fig. 4B is a partial enlarged view of the standing post shown in Fig. 4A;
Fig. 5 is a perspective view of a forklift's fork cover of the vehicle transporting frame;
Fig. 6 is a perspective view of a flat pallet of the vehicle transporting frame; and
Fig. 7A and Fig. 7B are schematic views of different combinations of the vehicle transporting frames within a container of 40 feet.

### DETAILED DESCRIPTION

In the following description, numerous specific details are set forth in order to provide a more thorough understanding of the present invention. However, it is obvious to those skilled in the art that the present invention may be implemented without one or more of these details. Some technical features well-known in the art are not described in other examples so as not to confuse with the embodiments of the present invention.

In order to understand the embodiments of the present invention thoroughly, a detailed structure will be provided in the following description. It would be apparent that the implementation of the embodiments of the present invention is not limited to the specific details that are familiar to those skilled in the art. Preferred embodiments of the present invention will be described below in detail. However, the present invention may further have other embodiments in addition to these detailed descriptions.

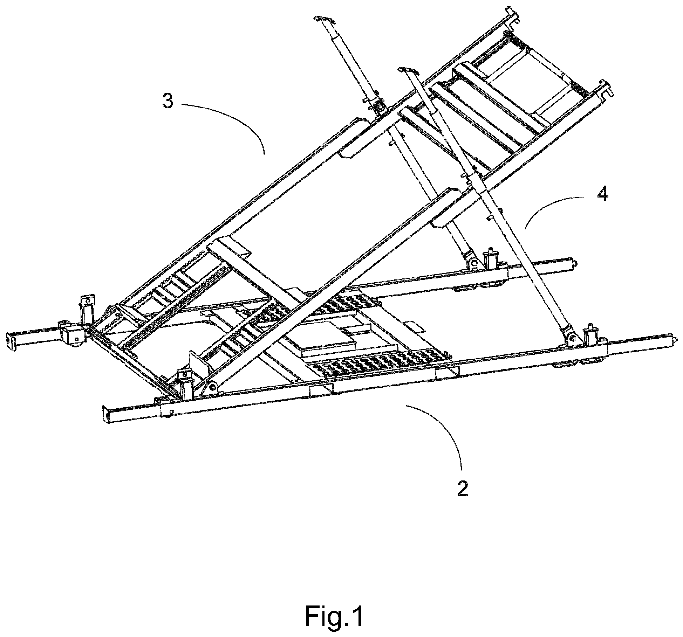

As shown in Fig. 1, the present invention provides a vehicle transporting frame 1, comprising a lower frame 2, an upper frame 3 for carrying a vehicle, and standing posts 4 supporting the upper frame 3 with multiple angles relative to the lower frame 2.

According to the present invention, the structure of the vehicle transporting frame 1 is simple, with a small stacked size. The upper frame 3 on which is loaded a vehicle may form different loading angles relative to the lower frame 2, thus enabling optimal utilization of an internal space of a container. Furthermore, medium-to-large vehicles and SUVs can be loaded on and secured at an outer side of the container 60, thus eliminating operation inconvenience and safety risks caused by insufficient space within the container 60.

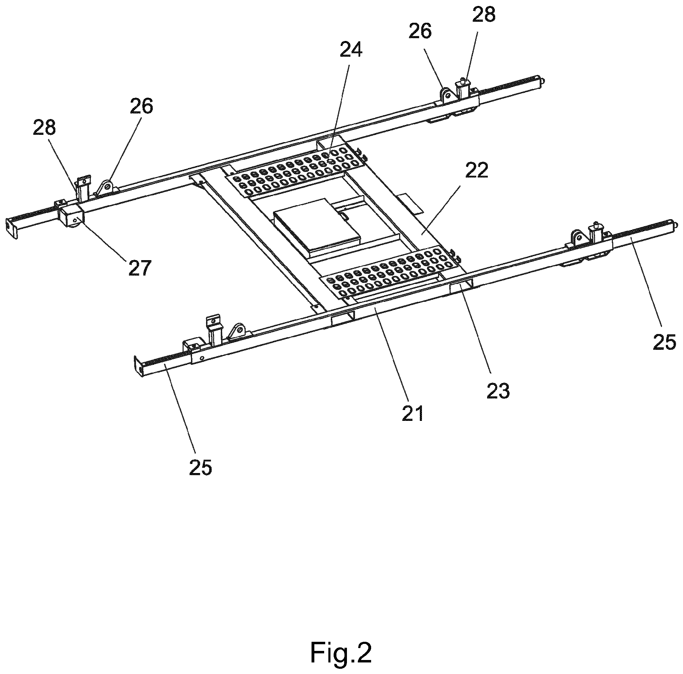

Turning now to Fig. 2, it shows a perspective view of a lower frame 2 of the vehicle transporting frame 1 according to the present invention, wherein, the lower frame 2 comprises two lower frame side beams 21 arranged in parallel at two sides, and a lower frame transverse beam 22 between the two lower frame side beams 21. The lower frame beam 22 may interconnect the two lower frame side beams 21 perpendicularly, that is, the lower frame side beam 21 is disposed along a length direction of the lower frame 2, and the lower frame transverse beam 22 is disposed along a width direction of the lower frame 2.

As shown in Fig. 2, the lower frame 2 further comprises a forklift pocket 23 disposed at one or two ends of the lower frame beam 22 along a width direction of the lower frame 2. For example, a forklift may lift up transversely, by inserting into the forklift pocket 23, the vehicle transporting frame 1 and move to or from an entry plate at a door of the container 60. Furthermore, the forklift may carry and stack up a plurality of the vehicle transporting frames 1 by inserting into the forklift pocket 23.

Alternatively, in the illustrated embodiment, a vehicle channel plate 24 for vehicle driving may be arranged in parallel between the two lower frame beams 22. Accordingly, by providing the vehicle channel plate 24 at the lower frame 2, it is possible to drive the vehicle to a suitable position through the vehicle channel plate 24, thereby not affecting and occupying the loading space for other vehicles due to no other structures below the vehicle after lifting up the upper frame 3. Further alternatively, a tool kit and a bracket for securing the tool kit may further be disposed between the two lower frame transverse beams 22.

Continuing reference to Fig. 2, at least one end of the lower frame side beam 21 may be provided with a support beam 25 telescopically secured relative thereto. In the illustrated embodiment, both ends of the lower frame side beam 21 are provided with a support beam 25. Therefore, the support beam 25 disposed at an end of the lower frame side beam 21 may regulate different protruding lengths along a length direction of the lower frame 2 so as to adjust the relative distances between the various vehicle transporting frames, and the vehicle transporting frame and the container 60.

In addition, the lower frame side beam 21 is provided with a hinge mount 26 for hinging with the upper frame 3 and the standing post 4, respectively. One end of the hinge mount 26 of the lower frame side beam 21, which hinges with the upper frame 3, may further be provided with a moving wheel 27. By providing the moving wheel 27, the forklift could lift up one end of the lower frame 2 (one end away from the moving wheel 27) and move the vehicle transporting frame 1 conveniently by sliding the moving wheel 27 after the vehicle transporting frame 1 is loaded by the vehicle. Alternatively, the lower frame side beam 21 may further comprise a stacking column 28 disposed at an end which may be used to stack with another vehicle transporting frame, thereby realizing aligned stacking of multiple sets of the vehicle transporting frame 1.

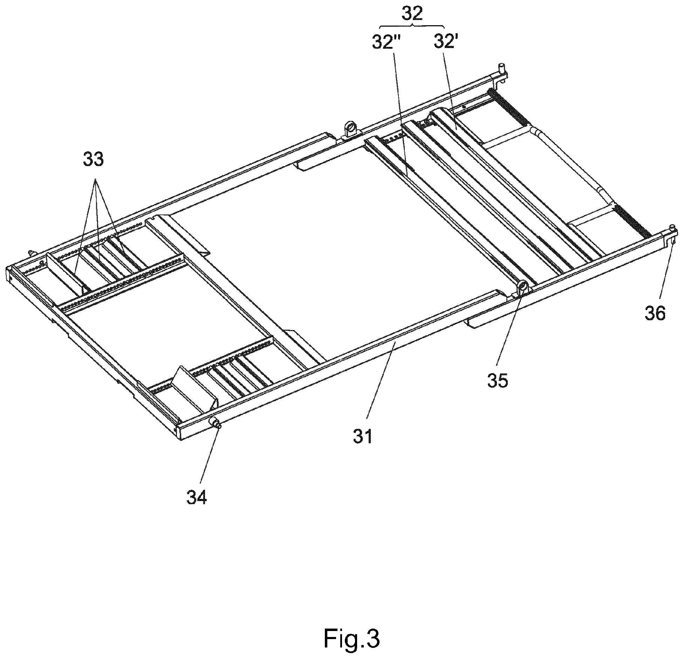

Turning now to Fig. 3, it shows a perspective view of an upper frame 3 of the vehicle transporting frame 1. The upper frame 3 comprises two upper frame side beams 31 disposed in parallel and a plurality of upper frame transverse beams 32 at the two upper frame side beams 31. Further, the upper frame 3 may also comprise a first tire holder 33, which can adjust different positions, disposed at the end of the two upper frame side beams 31.

Specifically, in the illustrated embodiment, the upper frame side beams 31 are disposed along a length direction of the upper frame 3. The upper transverse frame beams 32, along a width direction of the upper frame 3, are disposed at one end of the upper frame side beams 31 away from the lower frame 2 after lifting up the upper frame 3. The upper frame beams 32 interconnect the two upper frame side beams 31. The first tire holder 33 is disposed at the other end of the upper frame side beams 31. By providing a plurality of upper frame transverse beams 32 and/or the first tire holder, it is possible for the upper frame 3 to secure the front and rear tires of the vehicle after uplifting the vehicle. It would be appreciated that in an alternative embodiment, those skilled in the art could interchange the position of the illustrated first tire holder 33 with that of the upper frame transverse beams 32 according to needs.

In the upper frame 3 shown in Fig. 3, the upper frame transverse beams 32 comprise a tire holding beam 32' and a movable transverse beam 32''. Wherein the tire holding beam 32' can adjust different positions to adapt to wheel bases of different vehicles, and the movable transverse beam 32'' can adjust different positions or be detached according to needs. In the illustrated embodiment, as a vehicle is driving onto the vehicle transporting frame 1, the position of the movable transverse beam 32'' is adjusted to make the vehicle reverse to the upper frame 3 through the vehicle channel plate 24 of the lower frame 2. Then the front and rear tires of the vehicle are exactly stuck into the tire holding beam 32' and the first tire holder 33.

As shown in Fig. 3, one end of the upper frame side beam 31 is provided with an upper frame connecting shaft 34 for hinging with the lower frame 2, and the other end thereof is provided with an upper frame hinge mount 35 connected to the sleeve tube connection shaft 42 which will be described in detail later. Further, the other end of the upper frame side beam 31 can also provide with a forklift connector 36 for cooperating with the forklift. Thus, the forklift may perform operations of lifting up or laying down the upper frame 3 after the upper frame 3 is connected and secured with the forklift through the forklift connector 36, thereby adjusting the angle of the upper frame 3 relative to the lower frame 2.

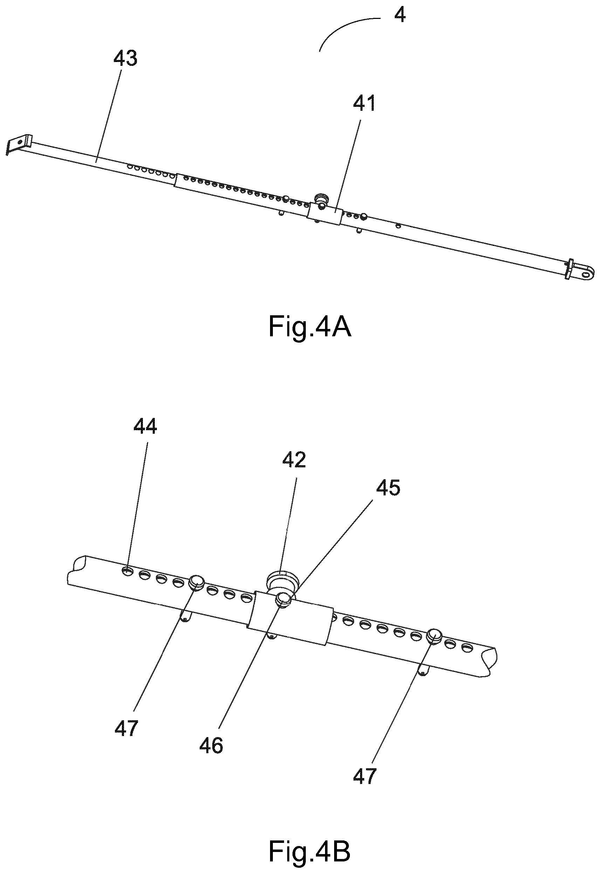

As shown in Figs. 4A and 4B, bottom end of a standing post 4 is provided with a hinge plate for hinging with a hinge mount 26 of the lower frame 2, and top end of the standing post 4 is provided with a crashworthy standing post 43 telescopically secured relative to the standing post 4. Further, the standing post 4 is sleeved with a sleeve tube 41 thereon slidable relative to the standing post 4, and the sleeve tube 41 has a sleeve tube connection shaft 42 connected another end of the upper frame 3. The standing post 4 is provided with a plurality of standing post holes 44. The sleeve tube 41 is provided with a positioning hole 45 and connected to the standing post 4 by a hinge pin 46 passing through the positioning hole 45 and one of the plurality of the standing post holes 44. In other words, when the forklift lifts up the upper frame 3, the standing post 4 is connected to the upper frame 3 through the sleeve tube connection shaft 42 on the sleeve tube 41. Meanwhile, with the hinge pin 46 passing through the positioning hole 45 and one of the plurality of standing post holes 44, the sleeve tube 41 is secured on the standing post 4 to indirectly secure the upper frame 3, and regulate the lifting height of the upper frame 3 relative to the lower frame 2 via adjusting which standing post hole 44 is pierced by the hinge pin 46.

Referring further to Fig. 4B, the standing post 4 is also provided with a stop pin 47 to define the highest position and/or the lowest position of the sleeve tube 41 relative to the standing post 4. Wherein, the stop pin 47 defining the highest position could define the highest position of the sleeve tube 41 on the standing post 4 for limiting the highest position where the vehicle rises, thereby preventing the vehicle from colliding with the ceiling of the container 60. The stop pin 47 defining the lowest position is a safety pin for preventing the sleeve tube 41, during the rising or descending process along the standing post 4, from directly falling the upper frame 3 into the lowest point of the standing post 4 due to fault of the forklift.

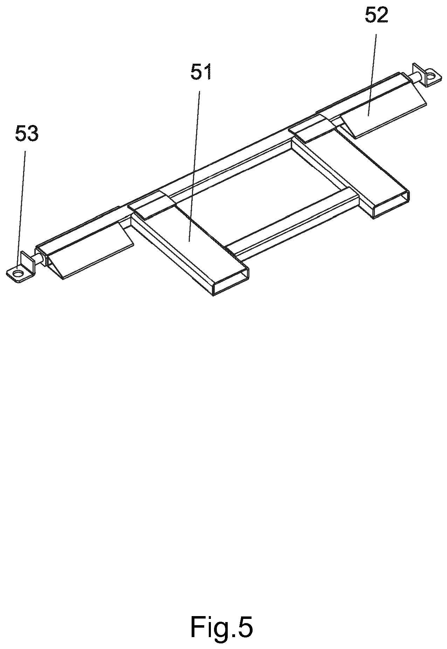

Turning to Fig. 5, the vehicle transporting frame 1 according to the present invention further comprises a forklift fork set 5, which is a dedicated tool for the forklift to lift up or lay down the lower frame 2 and the upper frame 3. The forklift fork set 5 is provided with a transverse beam, a forklift pocket 51, a boarding ramp plate52 and a connector 53, wherein the forklift pocket 51, the boarding ramp plate 52 and one end of the connector 53 are connected to the transverse beam. Specifically, the forklift pocket 51 is disposed in parallel; the boarding ramp plate 52 is disposed at an outer side of the forklift pocket 51; the connector 53 is disposed at an outer side beam of the boarding ramp plate 52 and used to connect with the upper frame 3 or the lower frame 2.

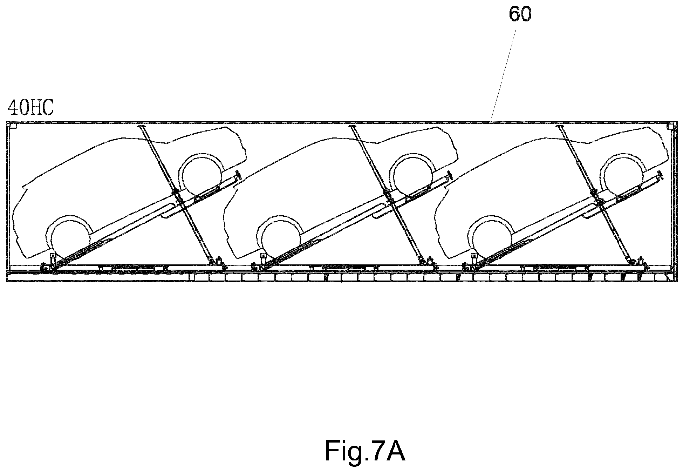

Turning to Fig. 7A, in the illustrated embodiment, three sets of the above vehicle transporting frame 1 can be accommodated in the container 60 of 40 feet, and the second and the third sets of the vehicle transporting frame 1 can be loaded in the same way as above.

The vehicle transporting frame 1 according to the present invention can be moved into the container 60 after loading and securing the vehicle at outer side of the container 60, thus eliminating operation inconvenience or safety risks caused by insufficient space within the container 60.

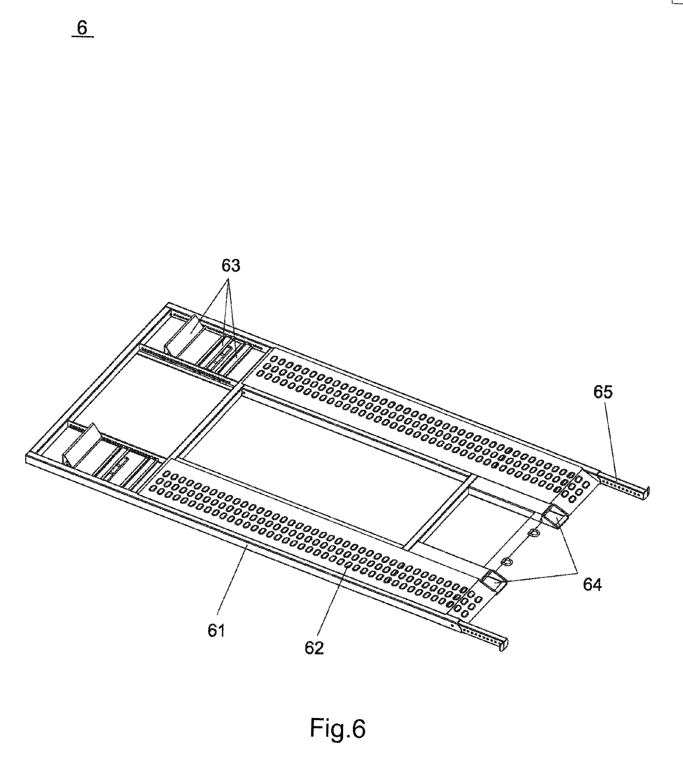

As shown in Fig. 6, the vehicle transporting frame 1 may further comprise a flat pallet 6. The flat pallet 6 comprises side beams 61 arranged in parallel, a vehicle support plate 62, a second tire holder 63 with an adjustable position at an end of the vehicle support plate 62 and a flat pallet forklift pocket 64 between the vehicle support plate 62. Thereby, the forklift can insert into the flat pallet forklift pocket 64 so as to perform transferring and dragging operations to the flat pallet 6. Alternatively, in the illustrated embodiment, the flat pallet 6 can further comprise a telescopic rod 65 sleeved in each side beam 61 and telescopically relative to the vehicle support plate 62.That is, the telescopic rod 65 is telescopically along a length direction of the vehicle support plate 62 to adjust the relative position of the pallet and the container 60.

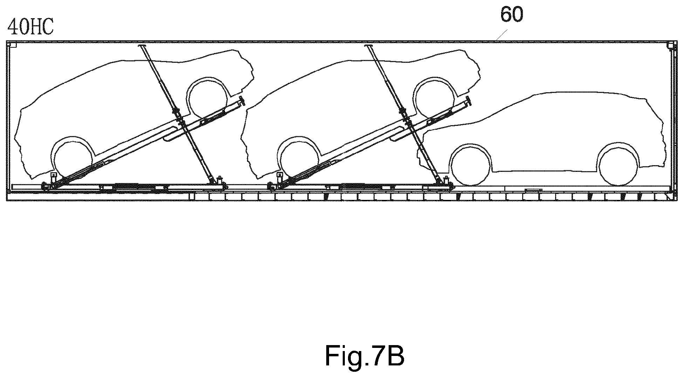

As shown in Fig. 7B, within the container 60 of 40 feet, after two sets of the vehicle transporting frame 1 according to the present invention are used to be loaded by vehicles, the above flat pallet 6 may further be used to complete the loading task in place of the above third set of the vehicle transporting frame 1.

## Claims

1. A vehicle transporting frame (1), comprising:
a lower frame (2);
an upper frame (3); and
standing posts (4) having one end hinged to the lower frame (2), the standing posts (4) being sleeved with sleeve tubes (41) slidable relative thereto, the sleeve tubes (41) having sleeve tube connection shafts (42);
**characterized in that**
the upper frame (3) has one end hinged to the lower frame (2) and the other end connected with the sleeve tube connection shafts (42),
wherein the lower frame (2) comprises lower frame transverse beams (22), a vehicle channel plate (24) is arranged in parallel between the lower frame transverse beams (22) to drive the vehicle to a suitable position on the upper frame (3) through the vehicle channel plate (24),
wherein the standing posts (4) have a plurality of standing post holes (44), and the sleeve tubes (41) have a positioning hole (45) and are connected with the standing post (4) by a hinge pin (46) passing through the positioning hole (45) and one of the plurality of standing post holes (44).

2. The vehicle transporting frame (1) according to claim 1, **characterized in that**: the lower frame (2) comprises two lower frame side beams (21) arranged in parallel, and the lower frame transverse beams (22) interconnect the two lower frame side beams (21).

3. The vehicle transporting frame (1) according to claim 1, **characterized in that**: each of the lower frame transverse beams (22) is provided with a forklift pocket (23).

4. The vehicle transporting frame (1) according to claim 2, **characterized in that**: at least one end of the lower frame side beam (21) is provided with a support frame (25) secured telescopically relative thereto.

5. The vehicle transporting frame (1) according to claim 2, **characterized in that**: the lower frame side beam (21) is provided with hinge mounts (26) for hinging with the upper frame (3) and the standing posts (4), respectively.

6. The vehicle transporting frame (1) according to claim 2, **characterized in that**: one end of the lower frame side beam (21) near the upper frame (3) is provided with a moving wheel (27).

7. The vehicle transporting frame (1) according to claim 1, **characterized in that**: the upper frame (3) comprises two upper frame side beams (31) arranged in parallel and an upper frame transverse beam (32) interconnecting the two upper frame side beams (31).

8. The vehicle transporting frame (1) according to claim 7, **characterized in that**: the upper frame (3) further comprises a first tire holder (33) near an end of the upper frame side beam (31).

9. The vehicle transporting frame (1) according to claim 7, **characterized in that**: the upper frame transverse beams (32) comprise a tire holding beam (32') with an adjustable position and/or a movable transverse beam (32") detachably connected to the upper frame side beams (31).

10. The vehicle transporting frame (1) according to claim 7, **characterized in that**: the upper frame side beam (31) is provided with an upper frame connection shaft (34) for hinging with the lower frame (2) and an upper frame hinge mount (35) for connecting with the sleeve tube connection shafts (42).

11. The vehicle transporting frame (1) according to claim 7, **characterized in that**: one end of each upper frame side beam (31) away from the lower frame (2) is provided with a connector (36) for cooperating with a forklift.

12. The vehicle transporting frame (1) according to claim 1, **characterized in that**: the standing post (4) has a stop pin (47) to define a highest position and/or a lowest position of the sleeve tube (41) relative to the standing post (4).

13. The vehicle transporting frame (1) according to claim 1, **characterized in that**: top end of the standing post (4) is provided with a crashworthy standing post (43) telescopically secured relative to the standing post (4).

## Patentansprüche

1. Fahrzeugtransportrahmen (1), aufweisend:
einen unteren Rahmen (2);
einen oberen Rahmen (3); und
Standpfosten (4), deren eines Ende an dem unteren Rahmen (2) angelenkt ist, wobei die Standpfosten (4) mit relativ zu ihnen verschiebbaren Hülsenrohren (41) ummantelt sind, wobei die Hülsenrohre (41) Hülsenrohr-Verbindungsschäfte (42) aufweisen;
**dadurch gekennzeichnet, dass**
der obere Rahmen (3) mit einem Ende am unteren Rahmen (2) angelenkt ist und das andere Ende mit den Hülsenrohr-Verbindungsschäften (42) verbunden ist,
wobei der untere Rahmen (2) untere Rahmenquerträger (22) aufweist, eine Fahrzeugkanalplatte (24) parallel zwischen den unteren Rahmenquerträgern (22) angeordnet ist, um das Fahrzeug durch die Fahrzeugkanalplatte (24) in eine geeignete Position auf dem oberen Rahmen (3) zu fahren,
wobei die Standpfosten (4) eine Mehrzahl von Standpfostenlöchern (44) aufweisen und die Hülsenrohre (41) ein Positionierungsloch (45) aufweisen und mit dem Standpfosten (4) durch einen Gelenkbolzen (46) verbunden sind, der durch das Positionierungsloch (45) und eines der Mehrzahl von Standpfostenlöchern (44) hindurchgeführt ist.

2. Fahrzeugtransportrahmen (1) nach Anspruch 1, **dadurch gekennzeichnet, dass**: der untere Rahmen (2) zwei parallel angeordnete untere Rahmenseitenträger (21) aufweist und die unteren Rahmenquerträger (22) die beiden unteren Rahmenseitenträger (21) miteinander verbinden.

3. Fahrzeugtransportrahmen (1) nach Anspruch 1, **dadurch gekennzeichnet, dass**: jeder der unteren Rahmenquerträger (22) mit einer Gabelstaplertasche (23) versehen ist.

4. Fahrzeugtransportrahmen (1) nach Anspruch 2, **dadurch gekennzeichnet, dass** mindestens ein Ende des unteren Rahmenseitenträgers (21) mit einem Stützrahmen (25) versehen ist, der teleskopisch relativ dazu befestigt ist.

5. Fahrzeugtransportrahmen (1) nach Anspruch 2, **dadurch gekennzeichnet, dass**: der untere Rahmenseitenträger (21) mit Gelenkhalterungen (26) zum Verbinden mit dem oberen Rahmen (3) beziehungsweise mit den Standpfosten (4) versehen ist.

6. Fahrzeugtransportrahmen (1) nach Anspruch 2, **dadurch gekennzeichnet, dass**: ein Ende des unteren Rahmenseitenträgers (21) in der Nähe des oberen Rahmens (3) mit einem beweglichen Rad (27) versehen ist.

7. Fahrzeugtransportrahmen (1) nach Anspruch 1, **dadurch gekennzeichnet, dass**: der obere Rahmen (3) zwei parallel angeordnete obere Rahmenseitenträger (31) und einen oberen Rahmenquerträger (32) aufweist, der die beiden oberen Rahmenseitenträger (31) miteinander verbindet.

8. Fahrzeugtransportrahmen (1) nach Anspruch 7, **dadurch gekennzeichnet, dass**: der obere Rahmen (3) ferner einen ersten Reifenhalter (33) in der Nähe eines Endes des oberen Rahmenseitenträgers (31) aufweist.

9. Fahrzeugtransportrahmen (1) nach Anspruch 7, **dadurch gekennzeichnet, dass**: die oberen Rahmenquerträger (32) einen Reifenhalteträger (32') mit einer einstellbaren Position und/oder einen verlagerbaren Querträger (32") aufweisen, der lösbar mit den oberen Rahmenseitenträgern (31) verbunden ist.

10. Fahrzeugtransportrahmen (1) nach Anspruch 7, **dadurch gekennzeichnet, dass**: der obere Rahmenseitenträger (31) mit einem oberen Rahmenverbindungsschaft (34) zum Verbinden mit dem unteren Rahmen (2) und einer oberen Rahmengelenkhalterung (35) zum Verbinden mit den Hülsenrohrverbindungsschäften (42) versehen ist.

11. Fahrzeugtransportrahmen (1) nach Anspruch 7, **dadurch gekennzeichnet, dass**: ein Ende jedes oberen Rahmenseitenträgers (31), das von dem unteren Rahmen (2) entfernt ist, mit einer Schnittstelle (36) zum Zusammenwirken mit einem Gabelstapler versehen ist.

12. Fahrzeugtransportrahmen (1) nach Anspruch 1, **dadurch gekennzeichnet, dass**: der Standpfosten (4) einen Anschlagstift (47) aufweist, um eine höchste Position und/oder eine niedrigste Position des Hülsenrohrs (41) relativ zu dem Standpfosten (4) zu definieren.

13. Fahrzeugtransportrahmen (1) nach Anspruch 1, **dadurch gekennzeichnet, dass**: das obere Ende des Standpfostens (4) mit einem crashsicheren Standpfosten (43) versehen ist, der teleskopisch relativ zu dem Standpfosten (4) befestigt ist.

## Revendications

1. Châssis de transport de véhicule (1), comprenant :
un châssis inférieur (2) ;
un châssis supérieur (3) ; et
des montants verticaux (4) ayant une extrémité articulée au châssis inférieur (2), les montants verticaux (4) étant gainés de tubes de manchon (41) pouvant coulisser par rapport à ceux-ci, les tubes de manchon (41) ayant des arbres de liaison de tubes de manchon (42) ;
**caractérisé en ce que**
le châssis supérieur (3) a une extrémité articulée au châssis inférieur (2) et l'autre extrémité reliée aux arbres de liaison de tubes de manchon (42),
dans lequel le châssis inférieur (2) comprend des poutres transversales de châssis inférieur (22), une plaque de guidage de véhicule (24) est agencée parallèlement entre les poutres transversales de châssis inférieur (22) pour conduire le véhicule à une position appropriée sur le châssis supérieur (3) à travers la plaque de guidage de véhicule (24),
dans lequel les montants verticaux (4) ont une pluralité de trous de montants verticaux (44), et les tubes de manchon (41) ont un trou de positionnement (45) et sont reliés aux montants verticaux (4) par une goupille d'articulation (46) passant à travers le trou de positionnement (45) et l'un de la pluralité de trous de montants verticaux (44).

2. Châssis de transport de véhicule (1) selon la revendication 1, **caractérisé en ce que** : le châssis inférieur (2) comprend deux poutres latérales de châssis inférieur (21) agencées en parallèle, et les poutres transversales de châssis inférieur (22) relient entre elles les deux poutres latérales de châssis inférieur (21).

3. Châssis de transport de véhicule (1) selon la revendication 1, **caractérisé en ce que** : chacune des poutres transversales de châssis inférieur (22) est pourvue d'un passage de fourche (23).

4. Châssis de transport de véhicule (1) selon la revendication 2, **caractérisé en ce que** : au moins une extrémité de la poutre latérale de châssis inférieur (21) est pourvue d'un châssis de support (25) fixé de manière télescopique par rapport à celle-ci.

5. Châssis de transport de véhicule (1) selon la revendication 2, **caractérisé en ce que** : la poutre latérale de châssis inférieur (21) est pourvue de supports d'articulation (26) pour s'articuler respectivement avec le châssis supérieur (3) et les montants verticaux (4).

6. Châssis de transport de véhicule (1) selon la revendication 2, **caractérisé en ce que** : une extrémité de la poutre latérale de châssis inférieur (21) près du châssis supérieur (3) est pourvue d'une roue mobile (27).

7. Châssis de transport de véhicule (1) selon la revendication 1, **caractérisé en ce que** : le châssis supérieur (3) comprend deux poutres latérales de châssis supérieur (31) agencées en parallèle et une poutre transversale de châssis supérieur (32) reliant entre elles les deux poutres latérales de châssis supérieur (31).

8. Châssis de transport de véhicule (1) selon la revendication 7, **caractérisé en ce que** : le châssis supérieur (3) comprend en outre un premier élément de maintien de pneu (33) près d'une extrémité de la poutre latérale de châssis supérieur (31).

9. Châssis de transport de véhicule (1) selon la revendication 7, **caractérisé en ce que** : les poutres transversales de châssis supérieur (32) comprennent une poutre de maintien de pneu (32') à position réglable et/ou une poutre transversale mobile (32") reliée de manière amovible aux poutres latérales de châssis supérieur (31).

10. Châssis de transport de véhicule (1) selon la revendication 7, **caractérisé en ce que** : la poutre latérale de châssis supérieur (31) est pourvue d'un arbre de liaison de châssis supérieur (34) pour s'articuler avec le châssis inférieur (2) et d'un support d'articulation de châssis supérieur (35) pour se relier aux arbres de liaison de tubes de manchon (42).

11. Châssis de transport de véhicule (1) selon la revendication 7, **caractérisé en ce que** : une extrémité de chaque poutre latérale de châssis supérieur (31) éloignée du châssis inférieur (2) est pourvue d'un raccord (36) pour coopérer avec une fourche d'élévation.

12. Châssis de transport de véhicule (1) selon la revendication 1, **caractérisé en ce que** : le montant vertical (4) a une goupille d'arrêt (47) pour définir la position la plus haute et/ou la position la plus basse du tube de manchon (41) par rapport au montant vertical (4).

13. Châssis de transport de véhicule (1) selon la revendication 1, **caractérisé en ce que** : l'extrémité supérieure du montant vertical (4) est pourvue d'un montant vertical résistant aux chocs (43) fixé de manière télescopique par rapport au montant vertical (4).
